(19) **Europäisches Patentamt**

**European Patent Office**

**Office européen des brevets**

(11) **EP 0 644 452 B1**

(12) **EUROPEAN PATENT SPECIFICATION**

(45) Date of publication and mention
of the grant of the patent:
**07.08.2002  Bulletin 2002/32**

(51) Int Cl.⁷: **G02F 1/1337**, G02F 1/1343

(21) Application number: **94114781.1**

(22) Date of filing: **20.09.1994**

(54) **Liquid crystal display device**

Flüssigkristall-Anzeigevorrichtung

Dispositif d'affichage à cristal liquide

(84) Designated Contracting States:
**DE FR GB**

(30) Priority: **20.09.1993  JP 23326293**
**12.10.1993  JP 25402893**

(43) Date of publication of application:
**22.03.1995  Bulletin 1995/12**

(73) Proprietor: **Hitachi, Ltd.**
**Chiyoda-ku, Tokyo 101 (JP)**

(72) Inventors:
• **Ohe, Masahito**
**Hitachi-shi, Ibaraki 316 (JP)**
• **Kondo, Katsumi**
**Katsuta-shi, Ibaraki 312 (JP)**

(74) Representative: **Beetz & Partner Patentanwälte**
**Steinsdorfstrasse 10**
**80538 München (DE)**

(56) References cited:
**EP-A- 0 420 340       US-A- 4 345 249**
**US-A- 4 929 060       US-A- 5 126 867**

## Description

The present invention relates to a liquid crystal display device of high picture quality with substantially eliminated residual image.

In prior art liquid crystal display devices, two opposite transparent electrodes formed on the two substrates were used as electrodes for driving the liquid crystal layer. In accordance therewith, a display method based on the twisted nematic display has been adopted, wherein the liquid crystal display is operated by applying an electric field approximately in vertical direction to the substrate boundary planes. On the other hand, there has been known a method wherein the direction of the electric field is approximately parallel to the substrates; in this method, a pair of comb-like electrodes is used as disclosed, for example, in JP-B-63-21907 and WO91/10936 or US-A-4 345 249. In these cases, the electrodes are not necessarily transparent, and opaque metallic electrodes having high conductivity are used. However, the above prior art is silent about the liquid crystal material, the orienting film and the insulating film, which are necessary for obtaining a high picture quality when driving the display system, wherein the electric field is supplied to the liquid crystal in an approximately parallel direction to the substrate plane (hereinafter called in-plane switching system), with active matrix driving or simple matrix driving.

When a character or a drawing is displayed in the display plane, the image of the character or the drawing remains for a while in the display plane even after erasing, and sometimes it causes an uneven display called afterimage. The afterimage is a common problem which leads to insufficient image quality both for display methods wherein the electric field is supplied in perpendicular direction or the in-plane switching system. Especially, in the case of the in-plane switching system, the afterimage effect occurs more easily than in cases wherein the applied electric field is perpendicular to the substrate plane.

It is the object of the present invention to provide a liquid crystal display device of high picture quality with substantially eliminated residual image.

The above object is achieved according to claim 1; the dependent claims relate to preferred embodiments.

The liquid crystal display device of the present invention (hereinafter referred to as a liquid crystal display device of in-plane switching type comprises:

display picture elements each being composed of electrodes provided on the first of a pair of substrates,

an orienting film for the liquid crystal layer formed on the first substrate directly or via an insulating film, the first substrate being arranged such as to face the second substrate on which another orienting film is formed,

the liquid crystal layer being held between the two substrates,

the electrodes being arranged such as to generate an electric field substantially parallel to the substrates and to the liquid crystal layer, and being connected to external control means, and polarizers provided at the upper side and at the lower side of the device,

**characterized** in that

the values of the respective products $(\varepsilon_r\rho)_{LC}$, $(\varepsilon_r\rho)_{AF}$ and $(\varepsilon_r\rho)_{PAS}$ of the specific dielectric constants $\varepsilon_r$ and the specific resistivities $\rho$ of the liquid crystal layer (LC), the orienting film (8) and the insulating film (PAS) have a relationship expressed by the following equations (1) to (3):

$$0.1 \leq (\varepsilon_r\rho)_{LC}/(\varepsilon_r\rho)_{AF} \leq 10 \qquad (1)$$

$$0.1 \leq (\varepsilon_r\rho)_{LC}/(\varepsilon_r\rho)_{PAS} \leq 10 \qquad (2)$$

$$0.1 \leq (\varepsilon_r\rho)_{AF}/(\varepsilon_r\rho)_{PAS} \leq 10 \qquad (3).$$

The liquid crystal display devices of the invention exhibit

a brightness recovering time of not greater than 5 min, the brightness recovering time being the time until the brightness of a displayed portion that has been displayed for 30 min and is then turned off, returns to the background brightness.

In liquid crystal display devices of in-plane switching type, the display picture elements are composed of scanning signal electrodes and image signal electrodes. They may further be provided with picture element electrodes and active elements, which are desirable, however, this feature does not restrict the present invention.

The orienting film is a film having the function to orient the liquid crystal. The term insulating film means a film for electrically insulating, however, the film concurrently can also have the function to protect an electrode.

In accordance with a first preferred embodiment, the respective products $(\varepsilon_r\rho)_{LC}$, $(\varepsilon_r\rho)_{AF}$ and/or $(\varepsilon_r\rho)_{PAS}$ of the specific dielectric constant $\varepsilon_r$ and the specific resistivity $\rho$ of the liquid crystal layer (abbreviated as LC), the orienting film (abbreviated as AF) and/or the insulating film (abbreviated as PAS) are within the range of $1 \cdot 10^9$ to $8 \cdot 10^{15}$ $\Omega\cdot$cm.

Here, the dielectric constant of the liquid crystal layer, $\varepsilon_r$, means the average dielectric constant expressed by the following equation:

$$\varepsilon_r = (\varepsilon\| + 2\varepsilon\bot)/3,$$

where $\varepsilon\|$ is the dielectric constant in the molecular major axis direction, and $\varepsilon\bot$ is the dielectric constant in the minor axis direction of the molecule.

When $\varepsilon_r\rho$ is less than $1 \cdot 10^9 \ \Omega\cdot cm$, the device does not have sufficient insulating properties, and a sufficient voltage keeping rate.

According to a second preferred embodiment of the liquid crystal display device of in-plane switching type according to the present invention the orienting film and/or the insulating film have values of the surface resistance of $3 \cdot 10^{11}$ to $2.5 \cdot 10^{18} \ \Omega/\square$

When the values of surface resistance are less than $3 \cdot 10^{11} \ \Omega/\square$, the device has insatisfactory insulating properties and voltage keeping rate.

According to a third preferred embodiment, the respective products $(\varepsilon_r\rho)_{LC}$, $(\varepsilon_r\rho)_{AF}$ and/or $(\varepsilon_r\rho)_{PAS}$ of the specific dielectric constant $\varepsilon_r$ and the specific resistivity $\rho$ of the liquid crystal layer, the orienting film and/or the insulating film mutually have an approximately similar value.

In accordance with a fourth preferred embodiment, the ratio of the maximum value to the minimum value of the respective products $(\varepsilon_r\rho)_{LC}$, $(\varepsilon_r\rho)_{AF}$ and/or $(\varepsilon_r\rho)_{PAS}$ is 1 to 100.

According to a fifth preferred embodiment of the present invention, the sum of the film thicknesses of the orienting film and of the insulating film on the substrate is 0.5 to 3 $\mu m$.

According to a sixth preferred embodiment, the device is provided with

input means for inputting information,
means for calculating or processing the information,
a device for the output of the calculated or processed information,
a memory device for storing the information, and
an internal power source.

In the liquid crystal display device of the present invention, the thickness of the insulating film is preferably in the range of 0.4 to 2 $\mu m$.

Further, in the liquid crystal display device of the present invention, the orienting film is preferably made of an organic material, and the insulating film is preferably made of an inorganic material. In accordance with another preferred embodiment, the orienting film is made of an organic material, and the insulating film has a double-layer structure made of an inorganic material and an organic material. According to still another preferred embodiment, the orienting film is made of an organic material, and the insulating film is made of an inorganic material, and the orienting film made of the organic material is preferably thicker than the insulating material made of the inorganic material.

Further, both the orienting film and the insulating film are preferably composed of an organic material, and both the orienting film and the insulating film are preferably composed of the same material. Furthermore, the surface plane of the orienting film which abuts on the liquid crystal is preferably flat.

In order to realize color displays having a high picture quality, a color filter is preferably provided on either one of the substrates, and the insulating film is preferably provided between the color filter and the liquid crystal layer. Further, a flattening film having the function to flatten steps on the color filter and composed of an organic material is preferably provided, and a film composed of inorganic material is preferably formed on the film composed of the organic material. Furthermore, the orienting film is preferably provided on the substrate having the color filter by the intermediate of a layer composed of an inorganic material.

In the following, the present invention will be described with reference to the drawings.

Figs. 1(a) to 1(d) are schematic illustrations for explaining the operation of the liquid crystal in a liquid crystal display device based on in-plane switching in accordance with the present invention,

Fig. 2 is a schematic illustration indicating angles formed by the orienting direction of the molecular longitudinal axis on the boundary plane to the electrical field direction, and by the transmission axis of a polarizer to the electrical field direction in a liquid crystal display device supplied with a horizontal electric field to the substrate, in accordance with the present invention,

Figs. 3 to 6 are plan views and cross sections of picture element units,

Fig. 7 is a diagram indicating a typical example of the system composition of a liquid crystal display device relating to the present invention,

Figs. 8 are schematic illustrations indicating the refraction law of electric force lines, and the variation of the horizontal electric field strength in a liquid crystal layer in dependence of the relative dielectric constant and the respective layer thickness,

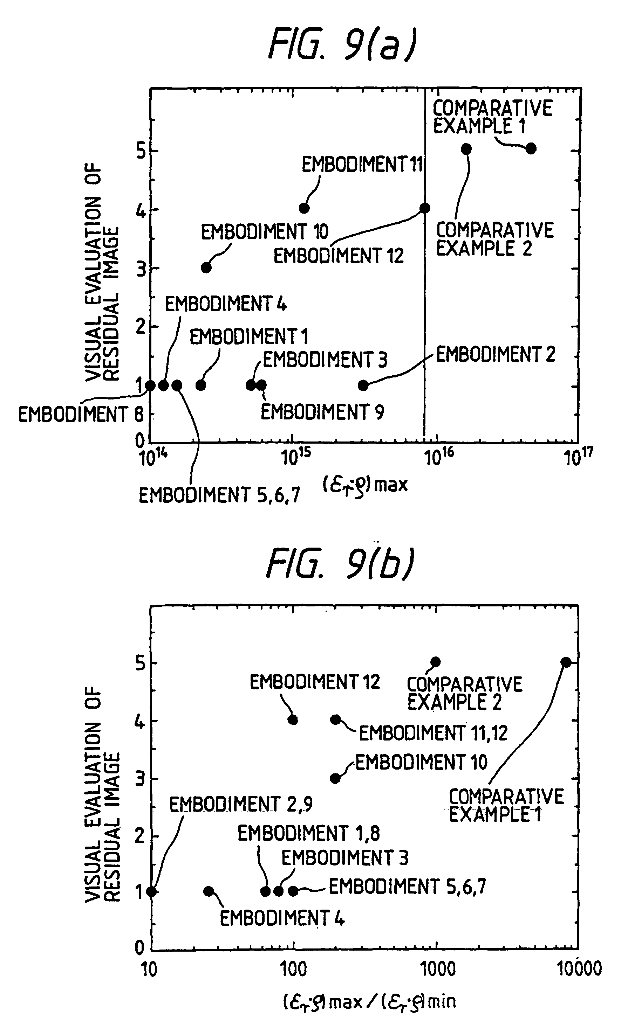

Fig. 9(a) is a graph indicating relationships between the maximum value of products $\varepsilon\rho$ of the respective specific resistivity $\rho$ and the specific dielectric constant $\varepsilon$ and residual image characteristics of liquid crystal, insulating film, and orienting film,

Fig. 9(b) is a graph indicating relationships between the ratio of the maximum value and the minimum value of products $\varepsilon\rho$ of the respective specific resistivity $\rho$ and the specific dielectric constant $\varepsilon$ and residual image characteristics of liquid crystal, insulating film, and orienting film,

Fig. 10(a) is a graph indicating the relationship between the sum of the film thicknesses of the insulating film and of the orienting film, and results of residual image evaluation,

Fig. 10(b) is a graph indicating the relationship between the sum of the film thicknesses of the insulating film and of the orienting film, and the transmission factor, and

Figs. 11 (a) and (b) are model graphs indicating relationships between the charging process and the discharging process of electric charge and residual image characteristics.

Hereinafter, the principle of an in-plane switching system, wherein an electric field is applied in a direction parallel to the substrate, and subsequently, the operation of display devices of the present invention will be explained.

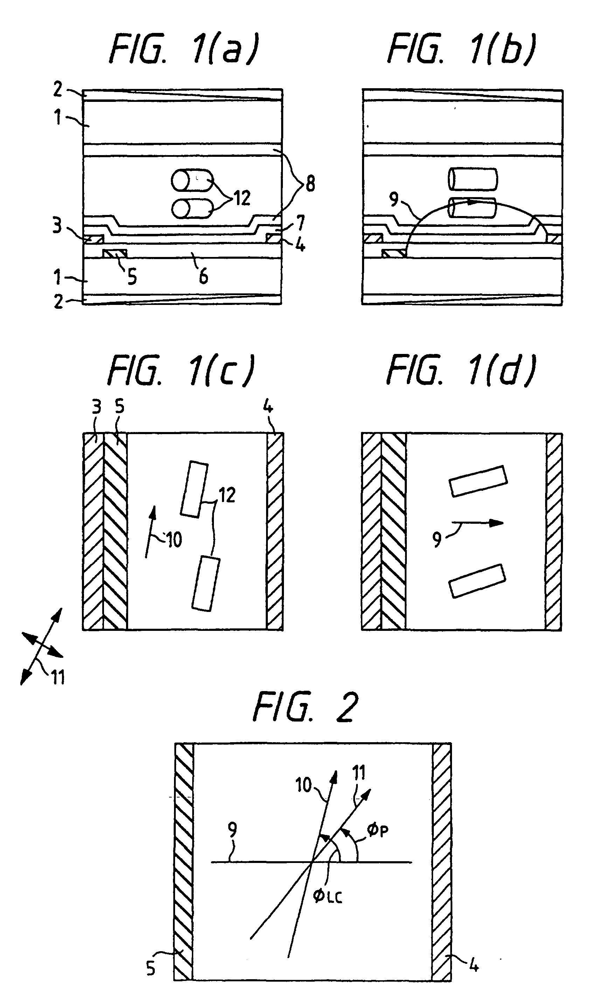

At the beginning, definitions of the angle $\phi_P$, which is the angle formed by the polarized light transmitting axis of a polarizer with the direction of the electric field, and the angle $\phi_{LC}$, which is the angle formed by the direction of the liquid crystal major axis (optical axis) at the vicinity of the liquid crystal boundary with the direction of the electric field are shown in Fig. 2. The polarizer and the liquid crystal boundary exist at the upper side and at the lower side of the device.

Therefore, the angles are expressed as $\phi_{P1}$, $\phi_{P2}$, $\phi_{LC1}$, and $\phi_{LC2}$, if necessary. Fig. 2 corresponds to a front view of the device of Fig. 1 which is explained below.

Figs. 1(a) and 1(b) are side cross sections indicating the liquid crystal operation in a liquid crystal panel of the present invention, and Figs. 1(c) and 1(d) are front views of the respective devices of Figs. 1(a) and 1(b). In Fig. 1, the active elements are omitted. Further, in accordance with the present invention, stripe-shaped electrodes are provided such as to form a plurality of picture elements, but only one picture element is shown in Fig. 1. A side cross section of a cell under no applied voltage is shown in Fig. 1(a), and the front view of Fig. 1(a) is shown in Fig. 1(c). Linear signal electrodes 3, 4, and a common electrode 5 are formed at the inner side of the first of a pair of transparent substrates 1, an insulating film 7 is provided on the substrates and the electrodes, and an orienting film 8 is provided and processed for orientation on the insulating film 7. A liquid crystal composition is held between the substrates. A bar-shaped liquid crystal molecule 12 of the liquid crystal layer is oriented so as to form a small angle to the longitudinal direction of the stripe-shaped electrodes, that is $45° < \phi_{LC} < 135°$, or, $-45° < \phi_{LC} < -135°$, when no electric field is applied. An example is explained hereinafter when the orienting direction of the liquid crystal molecule at the upper and the lower boundaries is parallel, that is $\phi_{LC1} = \phi_{LC2}$. Further, the dielectric anisotropy of the liquid crystal composition is assumed to be positive.

Next, when an electric field 9 is applied, the liquid crystal molecules change their orientation direction to the direction of the electric field as shown in FIGs. 1(b) and 1(d). Therefore, the optical transmission becomes changeable by applying an electric field when a polarizer 2 is arranged under a designated angle 11. As explained above, in accordance with the present invention, a display giving contrast becomes possible without the transparent electrodes. The dielectric anisotropy of the liquid crystal composition is assumed to be positive in the present description, but negative anisotropy is also usable. In the case of negative anisotropy, the liquid crystal molecule is oriented according to a first orientation condition so as to have a small angle, $\phi_{LC}$, between the vertical direction and the longitudinal direction of the stripe-shaped electrodes, that is $-45$ degrees $< \phi_{LC} < 45$ degrees, or, $135$ degrees $< \phi_{LC} < 225$ degrees.

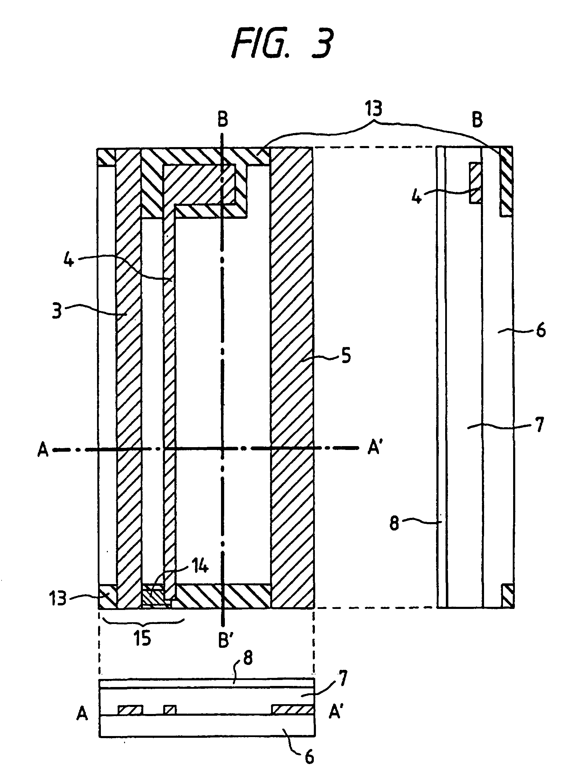

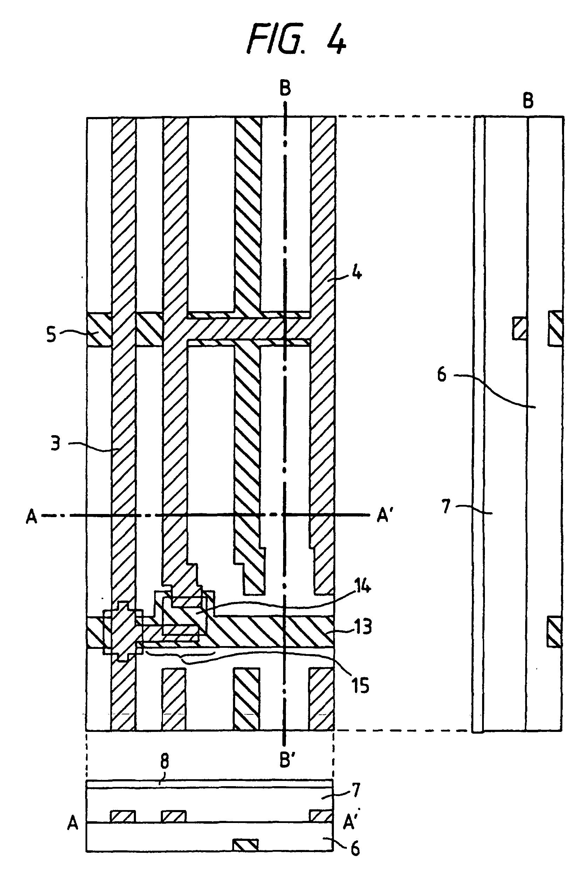

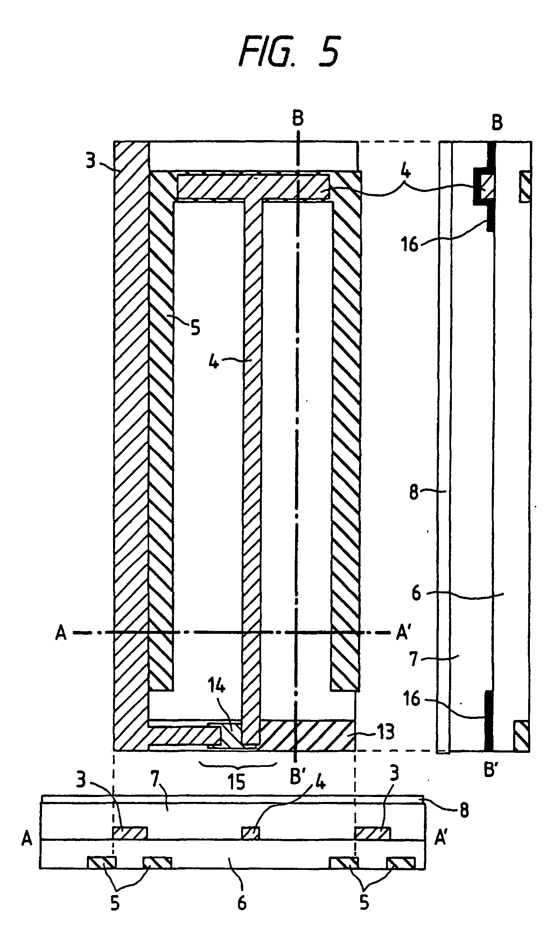

FIG.1 shows an example wherein the common electrode is a layer different from the signal electrode and the picture element electrode, but the common electrode can be formed by the same layer as that of the signal electrode and the picture element electrode. A typical example of the picture element structure when the common electrode is provided within the same layer with the picture element electrode is shown in FIG. 3, and typical examples of the picture element structure when the common electrodes are provided in layers different from that of the picture element electrodes are shown in FIGs. 4 and 5. Further, even if the common electrode is not provided, the scanning electrode can be given the same function as the function of the common electrode. However, the gist of the present invention explained hereinafter is to be seen in insulating materials for composing the liquid crystal element, and is applicable to various electrode structures and thin film transistor structures.

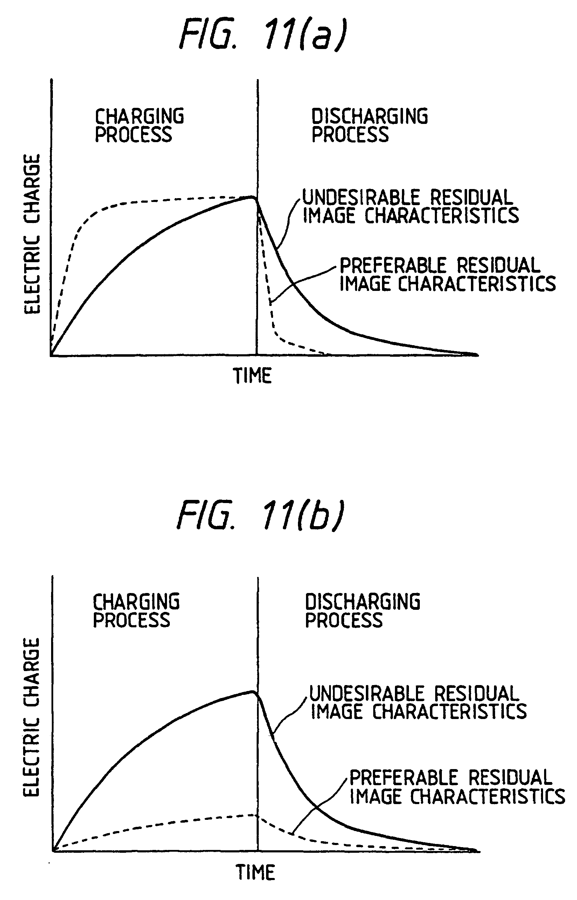

As explained above, a liquid crystal display device having a high picture quality with substantially eliminated residual images can be obtained by making the necessary time for recovering brightness of the display device after displaying an identical drawing pattern for 30 minutes less than five minutes. The residual images are induced when polarization is generated in the liquid crystal layer, the orienting film, or the insulating film by any reason. Therefore, the residual images can be reduced concretely, as explained above, by making the respective products $((\in_r\rho)_{LC}, (\in_r\rho)_{AF},$ and/or $(\in_r\rho)_{PAS})$ of the specific dielectric constant $\in_r$ and the specific resistivity $\rho$ of the liquid crystal layer, the orienting film and/or the insulating film equal to or less than $8 \cdot 10^{15}$ $\Omega$•cm, because accumulated electric charge can then be relaxed quickly. A model graph indicating the principle of residual image reduction in the above case is shown in FIG. 11(a). That means, the residual image can be reduced because the relaxation speed is fast even if electric charge is accumulated, and the electric charge is discharged quickly. Further, the residual image can be reduced by decreasing the accumulated electric charge as shown in FIG. 11(b) even if the relaxation speed is slow. Therefore, the residual image problem can be reduced by making the respective surface resistance of the orienting film and/or the insulating film equal to or less than $2.5 \cdot 10^{18}$ $\Omega/\square$ in order to decrease accumulated electric charge as stated in connection with the above second preferred embodiment. Furthermore, as stated in the above for the third preferred embodiment, the residual image can be reduced further by making the products of the specific dielectric constant $\in_r$ and the specific resistivity $\rho$ of the liquid crystal layer, the orienting film, and the insulating layer substantially equal. As described previously, the residual image is induced when polarization is generated in the liquid crystal layer, the orienting film, or the insulating film by any reason. And, the polarization in the respective layer and films interfere with each other such as the polarization generated in the orienting film generates a secondary polarization in the liquid crystal layer.

For instance, if any polarization remains in the orienting film in a relaxation process of the polarization of the liquid crystal layer, the polarization in the orienting film has the affect on the liquid crystal layer that the relaxation of the polarization in the liquid crystal layer is prevented. Accordingly, in order to allow the relaxation generated in the respective layer or films without interfering with each other to proceed, the respective relaxation times must be equal. The inventors of the present invention have found that the above-described principle can be utilized with significant effect in the method wherein the electric field is applied in a direction parallel to the substrate, that is, the in-plane switching method. In the in-plane switching method, electric equivalent circuits corresponding to the respective liquid crystal layer, the insulating film, and the orienting film are connected in parallel.

Therefore, for instance, when the product $\in_r\rho$ of the specific dielectric constant $\in_r$ and the specific resistivity $\rho$ for the orienting film or the insulating film is larger than that for the liquid crystal layer, a residual voltage in the orienting film or the insulating film is supplied to the liquid crystal layer as an extra voltage, and consequently, residual images are induced. Furthermore, in consideration that the resistance R can be expressed by the equations $R = \rho d/S$ (where $\rho$: specific resistivity, d: length in the direction of the electric field, S: vertical cross section area to the electric field), the in-plane switching system has a significantly larger resistance in the element structure than systems wherein the electric field is applied to the substrates perpendicularly. That means, the residual direct current component in the in-plane switching system is remarkably large. In the above-described case, a combination of the third or fourth preferred embodiments with the first preferred embodiment makes it possible to relax the accumulated charge in a short time without interfering with the liquid crystal layer, the orienting film, and/or the insulating film mutually in the course of the relaxation of the accumulated charge.

Therefore, this combination is effective for reducing the residual image.

The above principle can be utilized in the in-plane switching system irrespective of whether a simple matrix driving method or an active matrix driving method is applied.

Further, the resistance components of the orienting film and the insulating film at each picture element can be decreased by making the sum of the thicknesses of the film having the function to orient the liquid crystal (orienting film) and the film having the functions to insulate electrically and to protect the electrode group (insulating film) within a range of 0.5 to 3 $\mu$m, and desirably 0.7 to 2.8 $\mu$m. Actually, the thickness of the insulating film is desirably selected in the range of 0.4 to 2 $\mu$m as in order to reduce additional effects of the steps on the substrate whereon the electrode group is provided. As explained previously, in a method wherein the direction of the electric field applied to the liquid crystal is approximately parallel to the substrate plane, electric equivalent circuits corresponding to the liquid crystal layer, the insulating film, and the orienting film, respectively, being connected in parallel.

Accordingly, the voltage remaining in the orienting film and the insulating film is applied directly to the liquid crystal layer. Considering that residual images are generated by applying residual voltage in the orienting film and the insulating film to the liquid crystal layer, the residual voltage in the orienting film and the insulating film can be reduced and excessive voltage supplied to the liquid crystal layer can be eliminated by reducing resistance components corresponding to the orienting film and the insulating film at each picture element. In order to decrease the resistance components in the orienting film and the insulating film, the film thicknesses of the orienting film and the insulating film must be increased for enlarging the cross sectional area perpendicular to the direction of the electric field.

The insulating film can be formed with a reliable inorganic material, and the orienting film can be formed with an organic material. Further, the insulating film can be formed in a double-layer structure which is composed of an inorganic material layer and a relatively easily shapable organic material layer.

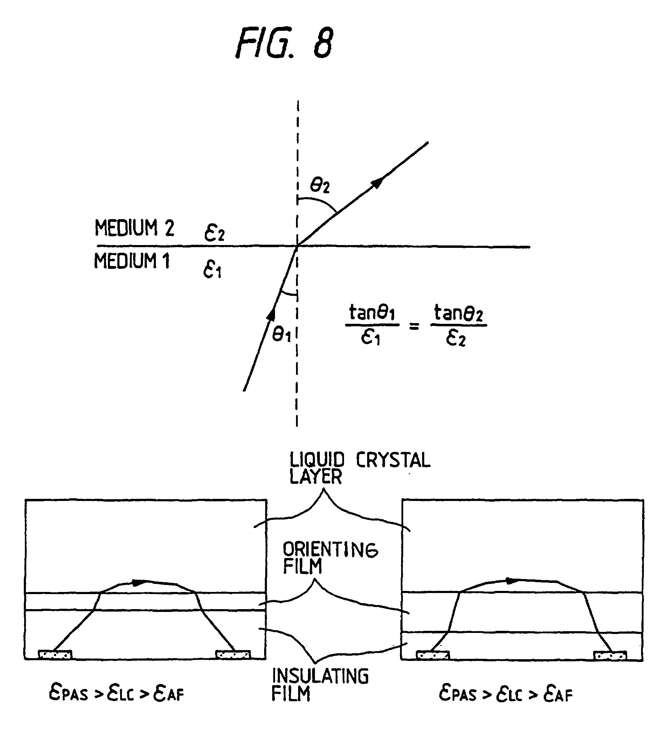

FIG. 8 is a schematic illustration indicating the variation in the course of the electric force in a liquid crystal layer depending on the magnitude of the dielectric constant in each layer. The smaller are the dielectric constants in the orienting film and the insulating film than the dielectric constant of the liquid crystal layer, the more ideal in-plane switching can be realized.

Accordingly, an electric field component horizontal to the substrate plane can be utilized effectively by replacing the layer of inorganic material with a layer of organic material having a dielectric constant as low as possible. Further, the above effect can be realized by making the insulating film of organic material. Furthermore, by making the insulating film and the orienting film of the same material a high efficiency in the manufacturing process can be realized. In order to improve the picture quality in a liquid crystal display device, flattening the surface plane of the orienting film abutting on the liquid crystal is important. By the flattening, steps at the surface plane can be eliminated, and light leakage can be suppressed by uniformly rubbing all through the surface plane.

In order to realize a color display by the in-plane switching system, it is only necessary to provide the insulating film between a color filter and the liquid crystal layer because a conductive body existing in the interval between the color filter and the liquid crystal destroys a horizontal electric field.

Generally, an organic material such as an epoxy resin is used as a flattening film for the color filter, and transparent electrodes are provided on the flattening film. However, transparent electrodes are not necessary in the in-plane switching system as stated previously, and the flattening film is in direct contact with the orienting film. In this case, the printability of the orienting film causes sometimes troubles. Therefore, a layer of an inorganic material such as silicon nitride provided on the upper portion of the flattening film is effective-in improving printability. The color filter is not necessarily provided on the facing planes of the substrates whereon the electrode group is provided; the precision of alignment can be improved by providing the color filter on the substrate plane whereon the active elements and the electrode group are mounted.

Detailed Description of Embodiments

Embodiment 1

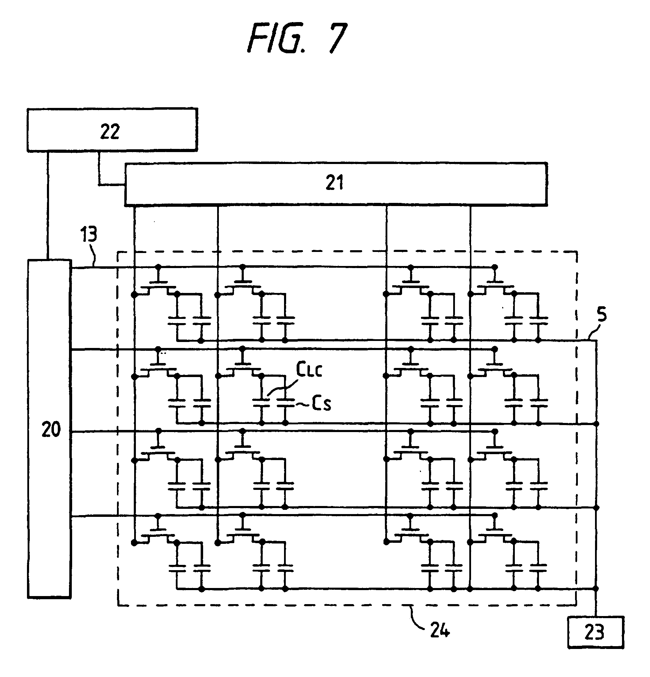

FIG. 3 indicates the electrode structure for a picture element unit in the first embodiment of the present invention. A scanning signal electrode 13 made of aluminum was formed on a polished glass substrate, and the surface of the scanning signal electrode was coated with an alumina film, i.e. an anodic aluminum oxide film. A gate silicon nitride (gate SiN) film 6 and an amorphous silicon (a-Si) film 14 were formed so as to cover the scanning signal electrode, and an n-type a-Si film, a picture element electrode 4 , and an image signal electrode 3 were formed on the a-Si film. Further, a common electrode 5 was provided in the same layer as the picture element electrode and the image signal electrode. The picture element electrode and the signal electrode had a structure, as shown in FIG. 3, parallel to the strip-shaped common electrode and crossing across the scanning signal electrode, and a thin film transistor 15 and a group of metallic electrodes were formed at one end of the substrate. In accordance with the above structure, an electric field 9 could be applied between the picture element electrode and the common electrode at one end of the substrate in a direction approximately parallel to the substrate plane. All of the electrodes on the substrate were made of aluminum. However, any metallic material having a low electric resistance such as chromium, copper, and others can be used. The number of the picture elements was 40 (x3) x 30 (i.e. n = 120, m = 30), and the pitches of the picture elements were 80 $\mu$m in width (i.e. between the common electrodes) and 240 $\mu$m in length (i.e. between the gate electrodes). The width of the common electrode was made to be 12 $\mu$m, which was narrower than the gap between adjacent common electrodes, in order to secure a large opening fraction. Three strip-shaped color filters of red (R), green (G), and blue (B) respectively, were provided on the substrate facing the substrate carrying the thin film transistor. On the color filters, a transparent resin was laminated in order to flatten the surface of the color filters. As material for the above transparent resin, an epoxy resin was used. Further, an orienting film made of a polyamide group resin was applied on the transparent resin. A driving LSI was connected to the panel as shown in FIG. 7, a vertical scanning circuit 20 and an image signal driving circuit 21 were connected to the TFT substrate, and the active matrix was driven by supplying a scanning signal voltage, an image signal voltage, and a timing signal from a power source circuit and a controller 22.

The drawn directions of the upper and the lower boundary planes were approximately mutually parallel, and formed an angle of 15 degrees ($\phi_{LC1} = \phi_{LC2} = 15°$) with the direction of the applied electric field (FIG. 2). A gap d was maintained by providing dispersed spherical polymer beads between the substrates; the interval was 6.5 $\mu$m when filled with a liquid crystal. The panel was held between two polarizers (made by Nitto Denko Co., G1220DU); the polarized light transmitting axis of one of the polarizers was selected to be approximately parallel to the rubbing direction, i.e. $\phi_{P1} = 15°$, and the axis of the other polarizer was selected to be perpendicular to the rubbing direction, i.e. $\phi_{P2} = -75°$. Accordingly, normally closed characteristics were obtained.

Between the substrates, a liquid crystal ZLI-2806 (made by Merck Co.) containing trans,trans-4,4'-dipentyl-trans-1,1'-dicyclohexane-4-carbonitrile as main component having a negative dielectric anisotropy $\Delta\in$ was held. The liquid crystal had a specific resistivity of $5.1 \cdot 10^{11}$ $\Omega$•cm and an average specific dielectric constant of 6.5. Silicon nitride (SiN) was used for the insulating film, and its specific resistivity was $2.5 \cdot 10^{13}$ $\Omega$•cm; the specific dielectric constant was 8. For the orienting film, a polyamide orienting film made from 2,2-bis [4-(p-aminophenoxy) phenyl]propane and pyromellitic acid dianhydride was used, and its specific resistivity was $7.5 \cdot 10^{13}$ $\Omega$•cm; its average specific dielectric constant was 2.9. Accordingly, the respective products ($\in_r\rho$) of specific resistivity $\rho$ and specific dielectric constant $\in_r$ of the liquid crystal layer, the insulating film, and the orienting film, respectively, were less than $8 \cdot 10^{15}$ $\Omega$•cm, and the ratio of the maximum value to the minimum value of the three products, $((\in_r\rho)_{max} / (\in_r\rho)_{min})$, was less than 100.

The residual image was evaluated by visual observation with five rankings. An identical figure pattern was displayed for thirty minutes, and the samples were classified by the time necessary for recovering brightness after switching off the display. The samples were evaluated and classified as follows;

A sample of rank 5 was the one that necessitated more than five minutes for recovering brightness; rank 4 was from one minute to less than five minutes, rank 3 was from 30 seconds to less than one minute, rank 2 was less than 30 seconds but generation of any residual image was observed, and rank 1 was no residual image at all.

The sample in the present embodiment 1 was evaluated as of rank 1 because no residual image was observed at all.

The present invention relates to the specific dielectric constant and the specific resistivity of the insulating material composing the element, and accordingly, the present invention is applicable to various structures of electrodes and TFTs.

Embodiment 2

FIG. 4 indicates an electrode structure for a picture element unit in the second embodiment of the present invention. A scanning signal electrode 13 and a common electrode 5 made of aluminum were formed on a polished glass substrate, and the surface of the scanning signal electrode was coated with an alumina film, i.e., an anodic aluminum oxide film. A gate silicon nitride (gate SiN) film 6 was formed so as to cover the scanning signal electrode and the common electrode. Subsequently, an amorphous silicon (a-Si) film 14, an and n-type a-Si film on the a-Si film were formed. Further, a picture element electrode 4 and a signal electrode 3 were formed. Accordingly, the picture element electrode and the common electrode were provided in different layers. The picture element electrode had an H-shaped structure, as shown in FIG. 4, and the common electrode had a cruciform structure, a part of each electrode had a structure working as a capacitance element. In accordance with the above structure, an electric field could be applied between the picture element electrode and the common electrode at one end of the substrate in a direction approximately parallel to the substrate plane. All of the electrodes on the substrate were made of aluminum. However, any metallic material having a low electric resistance such as chromium, copper, and others can be used. The number of the picture elements was 320 x 160, and the pitches of the picture elements were 100 $\mu$m in width (i.e. between the signal electrodes) and 300 $\mu$m in length (i.e. between the scanning electrodes). Driving transistors were connected to the panel as shown in FIG. 7; a vertical scanning circuit 20 and an image signal driving circuit 21 were connected to the TFT substrate, and the active matrix was driven by applying a scanning signal voltage, an image signal voltage, and a timing signal from a power source circuit and a controller 22.

The drawn directions of the upper and the lower boundary planes were approximately mutually parallel and formed an angle of 105 degrees ($\phi_{LC1} = \phi_{LC2} = 105°$) with the direction of the applied electric field (FIG. 2). A gap d was maintained by providing dispersed spherical polymer beads between the substrates; the interval was 4.2 $\mu$m when filled with a liquid crystal. The panel was held between two polarizers (made by Nitto Denko Co., G1220DU); the polarized light transmitting axis of one of the polarizers was selected to be approximately parallel to the rubbing direction, i.e. $\phi_{P1} = 105°$, and the axis of the other polarizer was selected to be perpendicular to the rubbing direction, i.e. $\phi_{P2} = 15°$. Accordingly, normally closed characteristics were obtained.

Between the substrates, a liquid crystal the main compound of which was a compound containing three terminal fluoro groups having a positive dielectric anisotropy $\Delta\in$ was held. The liquid crystal had a specific resistivity of $5.0 \cdot 10^{14}$ $\Omega$•cm and an average specific dielectric constant of 6.1. Silicon nitride (SiN) was used for the insulating film, and its specific resistivity was $3.0 \cdot 10^{14}$ $\Omega$•cm; the specific dielectric constant was 8. For the orienting film, a polyamide orienting film made from 2,2-bis [4-(p-aminophenoxy) phenyl] propane and pyromellitic acid dianhydride was used, and its specific resistivity was $1.0 \cdot 10^{14}$ $\Omega$•cm; its average specific dielectric constant was 2.9.

Accordingly, the respective products ($\in_r\rho$) of specific resistivity $\rho$ and specific dielectric constant $\in_r$ of the liquid crystal layer, the insulating film, and the orienting film, respectively, were less than $8 \cdot 10^{15}$ $\Omega$•cm, and the ratio of the maximum value to the minimum value of the three products, $((\in_r\rho)_{max} / (\in_r\rho)_{min})$, was less than 100.

The active matrix type liquid crystal display device as obtained above was evaluated as of rank 1 in the evaluation of the residual image, and no residual image was observed at all.

Embodiment 3

The composition of this embodiment is the same as that of embodiment 2 except for the following subject matters:

The insulating film had a double layer structure composed of an inorganic silicon nitride (SiN) layer and an organic epoxy resin layer, and a compound, RN-718 (made by Nissan Chemical Co.), was applied on the insulating film having two layers as an orienting film. The insulating film had a specific resistivity of $9.1 \cdot 10^{13}$ $\Omega$•cm and a specific dielectric constant of 3.1. The liquid crystal had a specific resistivity of $1.0 \cdot 10^{12}$ $\Omega$•cm and a specific dielectric constant of 6.1.

Accordingly, the respective products ($\in_r\rho$) of specific resistivity $\rho$ and specific dielectric constant $\in_r$ of the liquid crystal layer, the insulating film, and the orienting film, respectively, were less than $8 \cdot 10^{15}$ $\Omega$•cm,

and the ratio of the maximum value to the minimum value of the three products, $((\in_r\rho)_{max} / (\in_r\rho)_{min})$, was less than 100.

The active matrix type liquid crystal display device as obtained above was evaluated as of rank 1 in the evaluation of the residual image, and no residual image was observed at all.

Embodiment 4

FIGs. 5 shows the electrode structure for a picture element unit in the fourth embodiment of the present invention. A thin film transistor element 15 comprises a picture element electrode 4, a signal electrode 3, a scanning electrode 13 and amorphous silicon 14. A common electrode 5 was provided in the same layer as the scanning electrode, and formed by making a pattern from the same metallic layer. Further, the picture element electrode and the signal electrode were also formed by making a pattern from the same metallic layer. A capacitive element was formed of a structure comprising a gate silicon nitride (gate SiN) film 6 with the picture element electrode and the common electrode in a region connecting two common electrodes 5. The picture element electrode 4 is arranged between two common electrodes 5 as shown in front cross section (FIG. 5, A-A'). The pitches of the picture elements were 69 μm in width (i.e. between the signal wiring electrodes) and 207 μm in length (i.e. between the scanning wiring electrodes). The width of the respective electrodes was 10 μm. In order to secure a large opening fraction, the widths of the picture element electrode independently formed for a picture element unit and the portion extending in the longitudinal direction of the signal wiring electrode of the common electrode were made narrow such as 5 μm and 8 μm, respectively. In order to realize an opening fraction as large as possible, the common electrode and the signal electrode were somewhat overlapped (1 μm) via the insulating film. Accordingly, a black matrix structure 16 wherein shading was provided only in the direction along the scanning wiring electrode was formed. Consequently, the gap between the common electrode and the picture element electrode became 20 μm, and the length of the opening in the longitudinal direction became 157 μm, and a large opening fraction such as of 44.0 % was obtained. The number of picture elements was 320 x 160 with 320 signal wiring electrodes and 160 wiring electrodes. Driving transistors were connected to the panel as shown in FIG. 7; a vertical scanning circuit 20 and an image signal driving circuit 21 were connected to the TFT substrate, and the active matrix was driven by supplying a scanning signal voltage, an image signal voltage, and a timing signal from a power source circuit and a controller 22.

The insulating film was composed of a single layer made from an organic epoxy resin, and the compound RN-718 (made by Nissan Chemical Co.) was applied on the insulating film as an orienting film. In this case, the insulating film had a specific resistivity of 1.5 • $10^{12}$ Ω•cm and a specific dielectric constant of 3.0. The orienting film had a specific resistivity of 4.0 • $10^{13}$ Ω•cm and its specific dielectric constant was 3.1. The liquid crystal had a specific resistivity of 1.5 • $10^{13}$ Ω•cm, and its specific dielectric constant was 6.1.

Accordingly, the respective products $(\in_r\rho)$ of specific resistivity $\rho$ and specific dielectric constant $\in_r$ of the liquid crystal layer, the insulating film, and the orienting film, respectively, were less than 8 • $10^{15}$ Ω•cm, and the ratio of the maximum value to the minimum value of the three products, $((\in_r\rho)_{max} / (\in_r\rho)_{min})$, was less than 100.

The active matrix type liquid crystal display device as obtained above was evaluated as of rank 1 in the evaluation of the residual image, and no residual image was observed at all.

Embodiment 5

The composition of this embodiment is the same as that of embodiment 4 except for the following subject matters:

A color filter was formed on the insulating film. First, a silicon nitride (SiN) layer was formed, and subsequently, the color filter was provided by printing. Further, an epoxy resin was applied in order to flatten the surface. Then, the compound RN-718 (made by Nissan Chemical Co.) was applied on the insulating film as an orienting film. The insulating film of the present embodiment had a specific resistivity of 4.4 •$10^{11}$ Ω•cm and a specific dielectric constant of 3.9. The orienting film had a specific resistivity of 4.9 • $10^{13}$ Ω•cm and a specific dielectric constant of 3.1. The liquid crystal had a specific resistivity of 1.6 • $10^{13}$ Ω•cm and a specific dielectric constant of 6.1.

Accordingly, the respective products $(\in_r\rho)$ of specific resistivity $\rho$ and specific dielectric constant $\in_r$ of the liquid crystal layer, the insulating film, and the orienting film, respectively, were less than 8 • $10^{15}$ Ω•cm, and the ratio of the maximum value to the minimum value of the three products, $((\in_r\rho)_{max} / (\in_r\rho)_{min})$, was less than 100.

The active matrix type liquid crystal display device as obtained above was evaluated as of rank 1 in the evaluation of the residual image, and no residual image was observed at all.

Embodiment 6

The Composition of this embodiment is the same as that of embodiment 5 except for the following subject matters:

In order to increase the flatness of the orienting film plane abutting on the liquid crystal, the thickness of the orienting film was set five times, 5000 Å, of the thickness (1000 Å) used in the above embodiment 5. Therefore, the flatness of the plane was increased, the steps on the plane were decreased, and the lapping treatment was performed uniformly. Consequently, the light leakage at the step portions was eliminated.

The active matrix type liquid crystal display device as obtained above was evaluated as of rank 1 in the evaluation of the residual image, and no residual image was observed at all. The contrast was improved and was better than that of embodiment 5.

Embodiment 7

The composition of this embodiment is the same as that of embodiment 6 except for the following subject matters:

The printability of a polyamide orienting film on an epoxy resin layer is not necessarily suitable. Therefore, a silicon nitride (SiN) film, an inorganic material film, was formed on the epoxy resin which had the functions of flattening the color filter and serving as an insulating film. In accordance with the above treatment, the printability of the orienting film was improved.

The active matrix type liquid crystal display device as obtained above was evaluated as of rank 1 in the evaluation of the residual image, and no residual image was observed at all. The contrast was improved and was better than that of embodiment 5. The printability of the orienting film was improved, and the production yield was increased.

Embodiment 8

The composition of this embodiment is the same as that of embodiment 4 except for the following subject matters:

A color filter was formed on the insulating film. First, a silicon nitride (SiN) layer was formed, and subsequently, the color filter was provided by printing. Further, an epoxy resin was applied in order to flatten the surface. Then, the compound RN-718 (made by Nissan Chemical Co.) was applied on the insulating film as an orienting film. The insulating film of the present embodiment had a specific resistivity of $4.4 \cdot 10^{11}$ $\Omega$•cm and a specific dielectric constant of 3.9. The orienting film had a specific resistivity of $4.9 \cdot 10^{13}$ $\Omega$•cm and a specific dielectric constant of 3.1. The liquid crystal had a specific resistivity of $1.6 \cdot 10^{13}$ $\Omega$•cm and a specific dielectric constant of 6.1.

Accordingly, the respective products ($\in_r \rho$) of specific resistivity $\rho$ and specific dielectric constant $\in_r$ of the liquid crystal layer, the insulating film, and the orienting film, respectively, were less than $8 \times 10^{15}$ $\Omega$cm, and the ratio of the maximum value to the minimum value of the three products, $((\in_r \rho)_{max} / (\in_r \rho)_{min})$, was less than 100.

The active matrix type liquid crystal display device as obtained above was evaluated as of rank 1 in the evaluation of the residual image, and no residual image was observed at all.

Embodiment 9

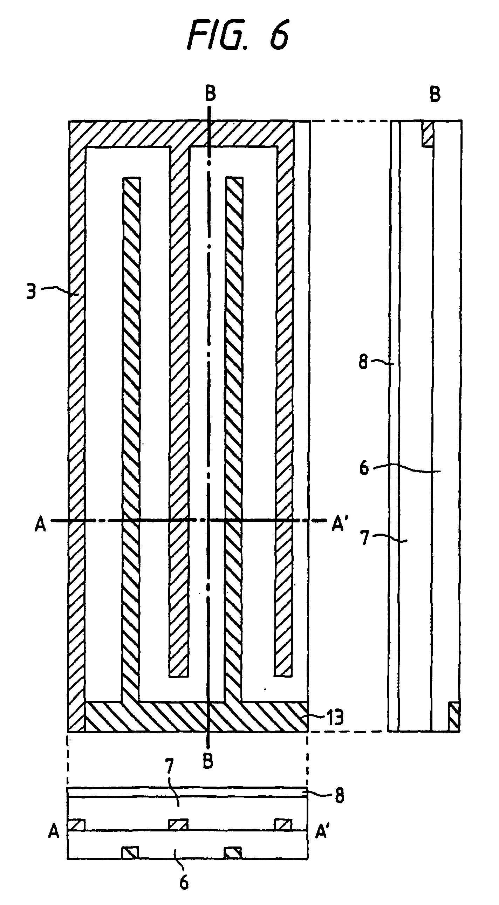

FIGs. 6 shows the electrode structure for a picture element unit in the ninth embodiment of the present invention. In this embodiment, thin film transistors were not provided to the picture element units. The scanning signal electrode 13 and the signal electrode 3 were provided in different layers. Each of the electrodes were connected respectively to a scanning circuit driver and an image signal circuit driver, and the matrix was driven in a simple time-sharing manner.

The drawn directions of the upper and the lower boundary planes were approximately mutually parallel and formed an angle of 105 degrees ($\phi_{LC1} = \phi_{LC2} = 105°$) with the direction of the applied electric field (FIG. 2). A gap d was maintained by providing dispersed spherical polymer beads between the substrates; the interval was 4.2 $\mu$m when filled with a liquid crystal. The panel was held between two polarizers (made by Nitto Denko Co., G1220DU); the polarized light transmitting axis of one of the polarizers was selected to be approximately parallel to the rubbing direction, i.e. $\phi_{P1} = 105°$, and the axis of the other polarizer was selected to be perpendicular to the rubbing direction, i.e. $\phi_{P2} = 15°$. Accordingly, normally closed characteristics were obtained.

In the present embodiment, a liquid crystal was used the main component of which was a trifluoro compound containing three terminal fluoro groups, having a specific resistivity of $1.0 \cdot 10^{14}$ $\Omega$•cm and an average specific dielectric constant of 6.1. Silicon nitride (SiN) was used for the insulating film, and its specific resistivity was $1.0 \cdot 10^{12}$ $\Omega$•cm; the specific dielectric constant was 8. For the orienting film, a polyamide orienting film made from 2,2-bis [4-(p-aminophenoxy) phenyl]propane and pyromellitic acid dianhydride was used; its specific resistivity was $2.2 \cdot 10^{13}$ $\Omega$•cm, and its average specific dielectric constant was 2.9.

Accordingly, the respective products ($\in_r \rho$) of specific resistivity $\rho$ and specific dielectric constant $\in_r$ of the liquid crystal layer, the insulating film, and the orienting film were less than $8 \cdot 10^{15}$ $\Omega$•cm and the ratio of the maximum value to the minimum value of the three products, $((\in_r \rho)_{max} / (\in_r \rho)_{min})$, was less than 100.

The active matrix type liquid crystal display device as obtained above was evaluated as of rank 1 in the evaluation of the residual image, and no residual image was observed at all.

Embodiment 10

The composition of the present embodiment is the same as the of embodiment 1 except for the following subject matters:

The liquid crystal had a specific resistivity of $2.0 \cdot 10^{11}$ $\Omega$•cm and an average specific dielectric constant of 6.5. Silicon nitride (SiN) was used for the insulating film, and its specific resistivity was $3.0 \cdot 10^{13}$

$\Omega$•cm; its specific dielectric constant was 8. For the orienting film, a polyamide orienting film made from 2,2-bis [4-(p-aminophenoxy) phenyl]propane and pyromellitic acid dianhydride was used, and its specific resistivity was 1.0 • $10^{13}$ $\Omega$•cm, and its average specific dielectric constant was 2.9.

Accordingly, the respective products ($\in_r\rho$) of specific resistivity $\rho$ and specific dielectric constant $\in_r$ of the liquid crystal layer, the insulating film, and the orienting film were less than 8 • $10^{15}$ $\Omega$•cm.

The active matrix type liquid crystal display device as obtained above was evaluated as of rank 3 in the evaluation of the residual image, and the residual image time was within five minutes.

Embodiment 11

The composition of this embodiment is the same as that of embodiment 2 except for the following subject matters:

The liquid crystal had a specific resistivity of 2.0 • $10^{14}$ $\Omega$•cm and an average specific dielectric constant of 6.1. Silicon dioxide ($SiO_2$) was used for the insulating film, and its specific resistivity was 1.0 • $10^{13}$ $\Omega$•cm; its specific dielectric constant was 8. For the orienting film, a polyamide orienting film made from 2,2-bis [4-(p-aminophenoxy) phenyl]propane and pyromellitic acid dianhydride was used, and its specific resistivity was 2.0 • $10^{12}$ $\Omega$•cm, and its average specific dielectric constant was 2.9.

Accordingly, the respective products ($\in_r\rho$) of specific resistivity $\rho$ and specific dielectric constant $\in_r$ of the liquid crystal layer, the insulating film, and the orienting film were less than 8 •$10^{15}$ $\Omega$•cm. The active matrix type liquid crystal display device as obtained above was evaluated as of rank 4 in the evaluation of the residual image, and the residual image time was within five minutes.

Embodiment 12

The composition of this embodiment is the same as that of embodiment 2 except for the following subject matters:

The liquid crystal had a specific resistivity of 2.0 • $10^{13}$ $\Omega$•cm and an average specific dielectric constant of 6.1. Silicon nitride (SiN) was used for the insulating film, and its specific resistivity was 1.0 • $10^{15}$ $\Omega$•cm, and its specific dielectric constant was 8. The orienting film was formed with the compound RN-718 (made by Nissan Chemical Co.), and its specific resistivity was 3.2 • $10^{12}$ $\Omega$•cm, and its average specific dielectric constant was 3.1.

Accordingly, the respective products ($\in_r\rho$) of specific resistivity $\rho$ and specific dielectric constant $\in_r$ of the liquid crystal layer, the insulating film, and the orienting film were less than 8 • $10^{15}$ $\Omega$•cm. The active matrix type liquid crystal display device as obtained above was evaluated as of rank 4 in the evaluation of the residual image, and the residual image time was within five minutes.

Embodiment 13

FIG. 5 shows the electrode structure for a picture element unit in the thirteenth embodiment of the present invention. A thin film transistor 15 was composed of a picture element electrode 4, a signal electrode 3, a scanning electrode 13, and amorphous silicon 14. A common electrode 5 was provided in the same layer with the scanning electrode, and the pattern was made of the same metal layer. Further, the picture element electrode and the signal electrode were formed by a pattern made of the same metal. A capacitive element is formed as a structure wherein a gate silicon nitride (gate SiN) film 6 is inserted between the picture element electrode and the common electrode in the region where the two common electrodes 5 are connected. The picture element electrode is arranged between the two common electrodes 5 as shown as a plan cross section in FIG. 5, cross section along A-A'. The picture element has pitches of 69 $\mu$m in the horizontal direction (i.e. between the signal wiring electrodes) and 207 $\mu$m in the vertical direction (i.e. between the scanning wiring electrodes). The width of all of these electrodes was 10 $\mu$m.

In order to improve the opening fraction, the signal wiring electrode of the picture element electrode formed independently for a picture element unit and the common electrode in the direction along the longitudinal direction of the signal wiring electrode had a somewhat narrower width at the extended portion, that were, 5 $\mu$m and 8 $\mu$m, respectively. In order to realize an opening fraction as large as possible, the common electrode and the signal electrode were overlapped somewhat (1 $\mu$m) through the intermediary of the insulating film.

Accordingly, a black matrix structure 16 wherein light was shielded only in the direction along the scanning wiring electrode was adopted. In accordance with the above described manner, the gap between the common electrodes became 20 $\mu$m, the longitudinal length of the opening became 157 $\mu$m, and consequently, a large opening fraction such as of 44.0 % was obtained.

The number of picture elements was 320 x 160 with 320 signal wiring electrodes and 160 wiring electrodes.

A driving LSI was connected to the panel as shown in FIG. 7; a vertical scanning circuit 20 and an image signal driving circuit 21 were connected to the TFT substrate, and the active matrix was driven by supplying a scanning signal voltage, an image signal voltage, and a timing signal from a power source circuit and a controller 22.

In the present embodiment, the insulating film of 0.4 $\mu$m thickness was formed with silicon nitride (SiN). For the orienting film, a polyamide orienting film made from 4,4'-diaminodiphenylether and pyromellitic acid dianhydride was used. The thickness of the orienting film was 0.1 μm, and accordingly, the total thickness of the insulating film and the orienting film was 0.5 μm.

Between the substrates, a nematic liquid crystal composition having a positive dielectric anisotropy $\Delta\in$ of 4.5 and a birefringence $\Delta$n of 0.072 (589 nm, 20°C) was inserted.

The drawn direction of the upper and the lower boundary planes were approximately mutually parallel and formed an angle of 95 degrees ($\phi_{LC1}$ = $\phi_{LC2}$ = 95°) with the direction of the applied electric field. A gap d was maintained by providing dispersed spherical polymer beads between the substrates; the interval was 4.5 μm when filled with the liquid crystal. Therefore, $\Delta$n·d is 0.324 μm. The panel was held between two polarizers (made by Nitto Denko Co., G1220DU); the polarized light transmitting axis of one of the polarizers was selected to be approximately parallel to the rubbing direction, i.e. $\phi_{P1}$ = 95°, and the axis of the other polarizer was selected to be perpendicular to the rubbing direction, i.e. $\phi_{P2}$ = 5°. Accordingly, normally closed characteristics were obtained.

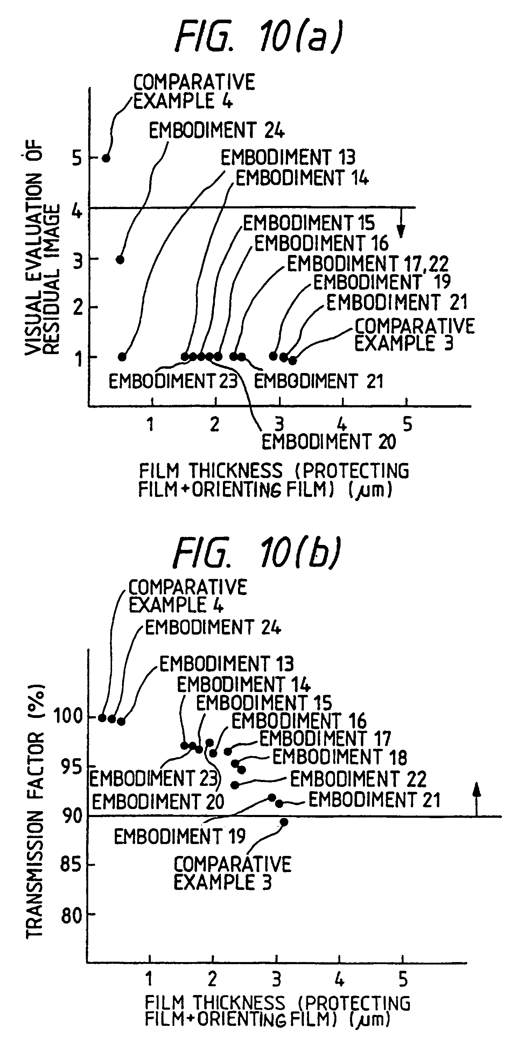

The residual image of the active matrix liquid crystal display device obtained in the above-explained manner was evaluated as of rank 1, as shown in FIG. 10, and no residual image was observed at all. Further, the transparency of the insulating film and the orienting film did correspond to a transmission factor of more than 90 % as shown in FIG. 10(b). The transparency was evaluated by the transmission factor at 400 nm.

Embodiment 14

The composition of this embodiment is the same as that of embodiment 13 except for the following subject matters:

In the present embodiment, silicon dioxide (SiO$_2$) was used for the insulating film, and its thickness was 1.2 μm. For the orienting film, a polyamide orienting film made from 4,4'-diaminodiphenylether and pyromellitic acid dianhydride was used. The thickness of the orienting film was 0.3 μm, and accordingly, the total thickness of the insulating film and the orienting film was 1.5 μm.

The residual image of the active matrix liquid crystal display device obtained in the above manner was evaluated as of rank 1 as shown in FIG. 10 (b), and no residual image was observed at all. Further, the transparency of the insulating film and the orienting film did correspond to a transmission factor of more than 90% as shown in FIG. 10(b).

Embodiment 15

The composition of this embodiment is the same as that of embodiment 13 except for the following subject matters:

In the present embodiment, the orienting film had a double layer structure comprising inorganic silicon nitride (SiN) and organic epoxy resin. The thickness of the silicon nitride layer and the epoxy resin layer was 1.0 μm and 0.6 μm, respectively. Further, for the orienting film, an orienting film composition RN-718 (made by Nissan Chemical Co.) was used, and its thickness was 0.2 μm. Accordingly, the total thickness of the insulating film and the orienting film was 1.8 μm.

The residual image of the active matrix liquid crystal display device obtained in the above manner was evaluated as of rank 1 as shown in FIG. 10 (b), and no residual image was observed at all. Further, the transparency of the insulating film and the orienting film did correspond to a transmission factor of more than 90% as shown in FIG. 10(b).

Embodiment 16

The composition of this embodiment is the same as that of embodiment 13 except for the following subject matters:

In the present embodiment, the orienting film had a double layer structure comprising silicon nitride (SiN) and epoxy resin. The thickness of the silicon nitride layer and the epoxy resin layer was 0.3 μm and 1.5 μm, respectively. Further, for the orienting film, the orienting film composition RN-718 (made by Nissan Chemical Co.) was used, and its thickness was 0.2 μm. Accordingly, the total thickness of the insulating film and the orienting film was 2.0 μm.

The residual image of the active matrix liquid crystal display device obtained in the above manner was evaluated as of rank 1 as shown in FIG. 10(a), and no residual image was observed at all. Further, the transparency of the insulating film and the orienting film did correspond to a transmission factor of more than 90% as shown in FIG. 10(b).

Embodiment 17

The composition of this embodiment is the same as that of embodiment 13 except for the following subject matters:

In the present embodiment, silicon dioxide (SiO$_2$) was used for the insulating film, and its thickness was 0.2 μm. For the orienting film, a polyamide orienting film made from 4,4'-diaminodiphenylether and pyromellitic acid dianhydride was used. The thickness of the orienting film was 2.0 μm, and accordingly, the total thickness of the insulating film and the orienting film was 2.2 μm.

The residual image of the active matrix liquid crystal display device obtained in the above manner was evaluated as of rank 1 as shown in FIG. 10 (a), and no residual image was observed at all. Further, the transparency of the insulating film and the orienting film did correspond to a transmission factor of more than 90% as shown in FIG. 10(b).

Embodiment 18

The composition of this embodiment is the same as that of embodiment 13 except for the following subject matters:

In the present embodiment, an epoxy resin was used as for the insulating film, and its thickness was 1.8 μm. For the orienting film, a polyamide orienting film made from 2,2-bis [4-(p-aminophenoxy) phenyl]propane and pyromellitic acid dianhydride was used, and its thickness was 0.5 μm. Accordingly, the total thickness of the insulating film and the orienting film was 2.3 μm.

The residual image of the active matrix liquid crystal display device obtained in the above manner was evaluated as of rank 1 as shown in FIG. 10 (a), and no residual image was observed at all. Further, the transparency of the insulating film and the orienting film did correspond to a transmission factor of more than 90% as shown in FIG. 10(b).

Embodiment 19

The composition of this embodiment is the same as that of embodiment 13 except for the following subject matters:

In the present embodiment, the insulating film and the orienting film were made of the same material. That means, a polyamide orienting film made from 2,2-bis [4-(p-aminophenoxy) phenyl]propane and pyromellitic acid dianhydride, which served as insulating film and as orienting film, was applied in a thickness of 2.8 μm

The residual image of the active matrix liquid crystal display device obtained in the above manner was evaluated as of rank 1 as shown in FIG. 10 (a), and no residual image was observed at all. Further, the transparency of the insulating film and the orienting film did correspond to a transmission factor of more than 90% as shown in FIG. 10(b).

Embodiment 20

The composition of this embodiment is the same as that of embodiment 13 except for the following subject matters:

A color filter was formed on the insulating film. First, a silicon nitride (SiN) film was formed, and the color filter was provided on the silicon nitride film by printing. Further, an epoxy resin was applied in order to flatten the film surface. Subsequently, the orienting film was formed by applying the orienting film composition RN-718 (made by Nissan Chemical Co.).

The thickness of the silicon nitride layer and the epoxy resin layer was 0.3 μm and 1.5 μm, respectively. Further, the orienting film composition was applied in a thichness of 0.2 μm.

The residual image of the active matrix liquid crystal display device obtained in the above manner was evaluated as of rank 1 as shown in FIG. 10 (a), and no residual image was observed at all. Further, the transparency of the insulating film and the orienting film did correspond to a transmission factor of more than 90% as shown in FIG. 10(b).

Embodiment 21

The composition of this embodiment is the same as that of embodiment 20 except for the following subject matters:

In order to make the orienting film surface abutting to the liquid crystal more flat, the epoxy resin layer was provided in a thickness of 0.3 μm, and the orienting film composition Rn-718 was applied in a thickness of 0,7μm. Accordingly, the flatness of the surface was improved, and the lapping treatment was performed more uniformly because of the decreased steps at the surface. As a result, light leakage was eliminated.

The residual image of the active matrix liquid crystal display device obtained in the above manner was evaluated as of rank 1 as shown in FIG. 10(a), and no residual image was observed at all. Further, the contrast was higher than that of embodiment 17.

Embodiment 22

The composition of this embodiment is the same as that of embodiment 20 except for the following subject matters:

The Printability of a polyamide orienting film on an epoxy resin layer is not necessarily suitable. Therefore, a silicon nitride (SiN) film of 0.3 μm in thickness was formed on an epoxy resin layer of 1.5 μm in thickness which was applied for flattening of the color filter and as insulating film. Therefore, the printability of the orienting film was improved. In this embodiment, the orienting film composition RN-718 was applied in a thickness of 0.1 μm.

The residual image of the active matrix liquid crystal display device obtained in the above manner was evaluated as of rank 1 as shown in FIG. 10 (a), and no residual image was observed at all. The contrast was higher than that of embodiment 17, and the production yield was increased by the improvement of the printability of the orienting film.

Embodiment 23

FIG. 6 shows the electrode structure for a picture element unit in the twenty third embodiment of the present invention. In the present embodiment, thin film transistors were not provided to the picture element units. A scanning signal electrode 13 and a signal electrode 3 were provided in different layers. Each electrode was connected respectively to a scanning circuit driver and an image signal circuit driver, and the matrix was driven in a simple time-sharing manner.

The drawn directions of the upper and the lower boundary planes were approximately mutually parallel and formed an angle of 105 degrees ($\phi_{LC1} = \phi_{LC2} = 105°$) with the direction of the applied electric field (FIG. 2). A gap d was maintained by providing dispersed spherical polymer beads between the substrates; the interval was 4.2 $\mu$m when filled with a liquid crystal. The panel was held between two polarizers (made by Nitto Denko Co., G1220DU); the polarized light transmitting axis of one of the polarizers was selected to be approximately parallel to the rubbing direction, i.e. $\phi_{P1} = 105°$, and the axis of the other polarizer was selected to be perpendicular to the rubbing direction, i.e. $\phi_{P2} = 15°$. Accordingly, normally closed characteristics were obtained.

For the orienting film, a silicon nitride (SiN) film of 0.7 $\mu$m in thickness was formed. An orienting film of RN-422 (made by Nissan Chemical Co.) was formed of 0.9 $\mu$m thickness on the insulating film.

The active matrix type liquid crystal display device as obtained above was evaluated as of rank 1 in the evaluation of the residual image, and no residual image was observed at all. Further, the transparency of the insulating film and the orienting film did correspond to a transmission factor of more than 90% as shown in FIG. 10 (b).

Embodiment 24

The composition of this embodiment is the same as that of embodiment 10 except for the following subject matters:

In the present embodiment, silicon nitride (SiN) film was used for the insulating film, and its thickness was 0.3 $\mu$m. For the orienting film, a polyamide orienting film made from 4,4'-diaminodiphenylether and pyromellitic acid dianhydride was used. The thickness of the orienting film was 0.1 $\mu$m, and accordingly, the total thickness of the insulating film and the orienting film was 0.4 $\mu$m.

The residual image of the active matrix liquid crystal display device obtained in the above manner was evaluated as of rank 3 as shown in FIG. 10(a), and the residual image time was within five minutes. Further, the transparency of the insulating film and the orienting film did correspond to a transmission factor of more than 90% as shown in FIG. 10(b).

The organic films used in the present invention for the insulating film and the orienting film are not restricted to the organic polymers described in the embodiments. In addition to polyamide and epoxy group polymers, polyesters, polyurethanes, polyvinyl alcohols, polyamides, silicones, acrylates, olefin-sulfon group polymers, and the like can be used irrespective of their photosensitivity. Further, surface treating agents, for instance, amino group silane coupling agents such as $\gamma$-aminopropyl triethoxysilane, 6-aminopropyl methyldi-ethoxysilane, and N-$\beta$(aminoethyl)-$\gamma$-aminopropyl trimethoxysilane, epoxy group silane coupling agents, titanate coupling agents, aluminum alcoholates, aluminum chelates, and zirconium chelates can be mixed or allowed to react with the organic polymers. Howerer, the present invention is not restricted by the above examples.

Further, the material for the inorganic film is not restricted to only silicon nitride and silicon dioxide, but also germanium nitride, germanium oxide, aluminum nitride, and aluminum oxide can be used. However, the present invention is not restricted by the above examples.

Comparative example 1

The Composition of this embodiment is the same as that of embodiment 2 except for the following subject matters:

The liquid crystal had a specific resistivity of $2.0 \cdot 10^{14}$ $\Omega$•cm and an average specific dielectric constant of 6.1. Silicon nitride (SiN) was used for the insulating film, and its specific resistivity was $6 \cdot 10^{15}$ $\Omega$•cm, and its specific dielectric constant was 8. For the orienting film, a polyamide orienting film made from 2,2-bis [4-(p-aminophenoxy) phenyl]propane and pyromellitic acid dianhydride was used, and its specific resistivity was $2.0 \cdot 10^{12}$ $\Omega$•cm and its average specific dielectric constant was 2.9.

Accordingly, the respective products ($\in_r\rho$) of specific resistivity $\rho$ and specific dielectric constant $\in_r$ of the liquid crystal layer and the orienting film were less than $8 \cdot 10^{15}$ $\Omega$•cm, but the product ($\in_r\rho$) of the specific resistivity $\rho$ and the specific dielectric constant $\in_r$ of the insulating film was larger than $8 \cdot 10^{15}$ $\Omega$•cm.

The active matrix type liquid crystal display device as obtained above was evaluated as of rank 5 in the evaluation of the residual image, and the residual image time was beyond five minutes.

Comparative example 2

The composition of this embodiment is the same as that of embodiment 2 except for the following subject matters:

The liquid crystal had a specific resistivity of $6.3 \cdot 10^{12}$ $\Omega$•cm and an average specific dielectric constant of 6.1. Silicon nitride (SiN) was used for the insulating film, and its specific resistivity was $2 \cdot 10^{15}$ $\Omega$•cm, and its specific dielectric constant was 8. For the orienting film, a polyamide orienting film made from 2,2-bis [4-(p-aminophenoxy) phenyl]propane and pyromellitic acid dianhydride was used, and its specific resistivity was $5.5 \cdot 10^{12}$ $\Omega$•cm, and its average specific dielectric constant was 2.9.

Accordingly, the respective products ($\in_r\rho$) of specific resistivity $\rho$ and specific dielectric constant $\in_r$ of the liquid crystal layer and the orienting film were less

than $8 \cdot 10^{15}$ Ω•cm, but the product ($\in_r\rho$) of the specific resistivity $\rho$ and the specific dielectric constant $\in_r$ of the insulating film was larger than $8 \cdot 10^{15}$ Ω•cm.

The active matrix type liquid crystal display device as obtained above was evaluated as of rank 5 in the evaluation of the residual image, and the residual image time was beyond five minutes.

Comparative example 3

The composition of this embodiment is the same as that of embodiment 10 except for the following subject matters:

In the present embodiment, silicon nitride (SiN) was used for the insulating film, and its thickness was 2.1 μm. For the orienting film, a polyamide orienting film made from 4,4'-diaminodiphenylether and pyromellitic acid dianhydride was used. The thickness of the orienting film was 1.0 μm, and accordingly, the total thickness of the insulating film and the orienting film was 3.1 μm.

The residual image of the active matrix liquid crystal display device obtained in the above manner was evaluated as of rank 1 as shown in FIG. 10(a), but the transparency of the insulating film and the orienting film did correspond to a transmission factor of less than 90% as shown in FIG. 10 (b).

Comparative example 4

The composition of the present embodiment is the same as that of embodiment 10 except for the following subject matters:

In the present embodiment, silicon nitride (SiN) was used for the insulating film, and its thickness was 0.1 μm. As for the orienting film, the composition RN-718 was used. The thickness of the orienting film was 0.1 μm, and accordingly, the total thickness of the insulating film and the orienting film was 0.2 μm.

The active matrix type liquid crystal display device as obtained above was evaluated as of rank 5 in the evaluation of the residual image, and the residual image time was beyond five minutes.

In accordance with the present invention, a liquid crystal display device of high picture quality with substantially eliminated residual image can be obtained by making the brightness recovering time within five minutes after displaying the same figure and/or character pattern for 30 minutes.

**Claims**

1. Liquid crystal display device of in-plane switching type, comprising:

   display picture elements each comprising electrodes (3, 4, 5) provided on the first of a pair of substrates (1),

   an orientation film (8) for the liquid crystal layer (12) formed on the first substrate (1) directly or via an insulating film (7),
   the first substrate (1) being arranged such as to face the second substrate (1) on which another orientation film (8) is formed,
   the liquid crystal layer (12) being held between the two substrates (1),
   the electrodes being arranged such as to generate an electric field (9) substantially parallel to the substrates (1) and to the liquid crystal layer (12), and being connectable to external control means (20, 21, 22),
   and polarizers (2) provided at the outer faces of the substrates (1),

   **characterized in that**
   the values of the respective products $(\varepsilon_r\rho)_{LC}$, $(\varepsilon_r\rho)_{AF}$ and $(\varepsilon_r\rho)_{PAS}$ of the specific dielectric constants $\varepsilon_r$ and the specific resistivities $\rho$ of the liquid crystal layer (LC) (12), the orienting film (AF) (8) and the insulating film (PAS) (7)
   have a relationship expressed by the following equations (1) to (3) :

   $$0.1 \le (\varepsilon_r\rho)_{LC}/(\varepsilon_r\rho)_{AF} \le 10 \qquad (1)$$

   $$0.1 \le (\varepsilon_r\rho)_{LC}/(\varepsilon_r\rho)_{PAS} \le 10 \qquad (2)$$

   $$0.1 \le (\varepsilon_r\rho)_{AF}/(\varepsilon_r\rho)_{PAS} \le 10 \qquad (3).$$

2. The liquid crystal display device according to claim 1,
   **characterized in that**
   the respective products $(\varepsilon_r\rho)_{LC}$, $(\varepsilon_r\rho)_{AF}$ and $(\varepsilon_r\rho)_{PAS}$ are within the range of $1 \cdot 10^9$ to $8 \cdot 10^{15}$ Ω·cm.

3. The liquid crystal display device according to claim 1 or 2,
   **characterized in that**
   the orientation film (8) is formed on the first substrate (1) via an insulating film (7).

4. The liquid crystal display device according to any of claims 1 to 3,
   **characterized in that**
   the orientation film (8) and/or the insulating film (7) have a surface resistance of $3.0 \cdot 10^{11}$ to $2.5 \cdot 10^{18}$ Ω/□.

5. The liquid crystal display device according to any of claims 1 to 4,
   **characterized in that**
   the ratio of the maximum value to the minimum value of the respective products $(\varepsilon_r\rho)_{LC}$, $(\varepsilon_r\rho)_{AF}$ and $(\varepsilon_r\rho)_{PAS}$ is 1 to 100.

6. The liquid crystal display device according to any of claims 1 to 5, wherein the display picture elements are composed of scanning signal electrodes, image signal electrodes, picture element electrodes, and active elements provided on the first substrate (1).

7. The liquid crystal display device according to any of claims 1 to 6,
**characterized in that**
the sum of the film thicknesses of the orientation film (8) and of the insulating film (7) is 0.5 to 3 μm.

8. The liquid crystal display device according to any of claims 1 to 7,
**characterized in that**
the film thickness of the insulating film (7) is 0.4 to 2 μm.

9. The liquid crystal display device according to any of claims 1 to 8,
**characterized in that**
the orientation film (8) is made of an organic material, and the insulating film (7) is made of an inorganic material or has a double-layer structure of an inorganic material and an organic material.

10. The liquid crystal display device according to any of claims 1 to 9,
**characterized in that**
the orientation film (8) is made of an organic material, and the insulating film (7) is made of an inorganic material, and the layer composed of the organic material is thicker than the layer composed of the inorganic material.

11. The liquid crystal display device according to any of claims 1 to 10,
**characterized in that**
both the orientation film (8) and the insulating film (7) are made of an organic material.

12. The liquid crystal display device according to any of claims 1 to 11,
**characterized in that** the surface plane of the orientation film (8) abutting on the liquid crystal layer (12) is flat.

13. The liquid crystal display device according to any of claims 1 to 8, 11 and 12,
**characterized in that**
both the orientation film (8) and the insulating film (7) are made of the same material.

14. The liquid crystal display device according to any of claims 1 to 13,

**characterized in that**
a color filter is provided on either one of the substrates (1), and the insulating film (7) is provided between the color filter and the liquid crystal layer (12).

15. The liquid crystal display device according to any of claims 1 to 14,
**characterized in that**
a flattening film having the function to flatten steps on the color filter surface made of an organic material is provided, and an inorganic film is formed on the flattening film.

16. The liquid crystal display device according to claim 14 or 15,
**characterized in that** a color filter is formed on the substrate (1) which has scanning signal electrodes, image signal electrodes, picture element electrodes, and active elements for the picture elements, and the insulating film (7) is provided between the color filter and the liquid crystal layer (12).

17. The liquid crystal display device according to any of claims 1 to 16,
**characterized in that**
means for inputting information, means for calculating or processing that information in a predetermined manner, a device for the output of the processed information, a device for storing the processed information, and an internal power source are provided.

**Patentansprüche**

1. Flüssigkristall-Anzeigevorrichtung vom In-Plane-Switching-Typ, die aufweist:

- Anzeige-Bildelemente, die jeweils Elektroden (3, 4, 5) aufweisen, die auf dem ersten von zwei Substraten (1) vorgesehen sind,
- einen Orientierungsfilm (8) für die Flüssigkristallschicht (12), der auf dem ersten Substrat (1) direkt oder unter Zwischenschaltung eines Isolierfilms ausgebildet ist, wobei das erste Substrat (1) so angeordnet ist, daß es dem zweiten Substrat (1) gegenüberliegt, auf dem ebenfalls ein Isolierfilm (8) ausgebildet ist, die Flüssigkristallschicht (12) zwischen den beiden Substraten (1) gehalten wird und die Elektroden so angeordnet sind, daß ein elektrisches Feld (9) erzeugt wird, das im wesentlichen parallel zu den Substraten und zur Flüssigkristallschicht (12) ist, und die Elektroden mit einer externen Steuereinrichtung (20, 21, 22) verbindbar sind, und

- Polarisatoren (2), die auf den Außenflächen der Substrate (1) vorgesehen sind,

**dadurch gekennzeichnet, daß**
die Werte der Produkte $(\varepsilon_r\rho)_{LC}$, $(\varepsilon_r\rho)_{AF}$ und $(\varepsilon_r\rho)_{PAS}$ der spezifischen Dielektrizitätskonstanten $\varepsilon_r$ und der spezifischen Widerstände $\rho$ der Flüssigkristallschicht (LC) (12), des Orientierungsfilms (AF) (8) bzw. des Isolierfilms (PAS) (7) über die folgenden Gleichungen (1) bis (3) miteinander in Beziehung stehen:

$$0{,}1 \leq (\varepsilon_r\rho)_{LC}/(\varepsilon_r\rho)_{AF} \leq 10 \qquad (1),$$

$$0{,}1 \leq (\varepsilon_r\rho)_{LC}/(\varepsilon_r\rho)_{PAS} \leq 10 \qquad (2),$$

$$0{,}1 \leq (\varepsilon_r\rho)_{AF}/(\varepsilon_r\rho)_{PAS} \leq 10 \qquad (3).$$

2. Flüssigkristall-Anzeigevorrichtung nach Anspruch 1, **dadurch gekennzeichnet, daß** die entsprechenden Produkte $(\varepsilon_r\rho)_{LC}$, $(\varepsilon_r\rho)_{AF}$ und $(\varepsilon_r\rho)_{PAS}$ im Bereich von $1 \cdot 10^9$ bis $8 \cdot 10^{15}$ $\Omega \cdot$cm liegen.

3. Flüssigkristall-Anzeigevorrichtung nach Anspruch 1 oder 2, **dadurch gekennzeichnet, daß** der Orientierungsfilm (8) auf dem ersten Substrat (1) unter Zwischenschaltung eines Isolierfilms (7) ausgebildet ist.

4. Flüssigkristall-Anzeigevorrichtung nach einem der Ansprüche 1 bis 3,
**dadurch gekennzeichnet, daß**
der Orientierungsfilm (8) und/oder der Isolierfilm (7) einen Flächenwiderstand von $3{,}0 \cdot 10^{11}$ bis $2{,}5 \cdot 10^{18}$ $\Omega/\square$ aufweisen.

5. Flüssigkristall-Anzeigevorrichtung nach einem der Ansprüche 1 bis 4,
**dadurch gekennzeichnet, daß**
das Verhältnis des Maximalwerts zum Minimalwert der entsprechenden Produkte $(\varepsilon_r\rho)_{LC}$, $(\varepsilon_r\rho)_{AF}$ und $(\varepsilon_r\rho)_{PAS}$ 1 bis 100 beträgt.

6. Flüssigkristall-Anzeigevorrichtung nach einem der Ansprüche 1 bis 5, wobei die Anzeige-Bildelemente aus Abtastsignalelektroden, Bildsignalelektroden, Bildelementelektroden und aktiven Elementen zusammengesetzt sind, die auf dem ersten Substrat (1) vorgesehen sind.

7. Flüssigkristall-Anzeigevorrichtung nach einem der Ansprüche 1 bis 6,
**dadurch gekennzeichnet, daß**
die Summe der Schichtdicke des Orientierungsfilms (8) und der Schichtdicke des Isolierfilms (7) 0,5 bis 3 $\mu$m beträgt.

8. Flüssigkristall-Anzeigevorrichtung nach einem der Ansprüche 1 bis 7,
**dadurch gekennzeichnet, daß**
die Schichtdicke des Isolierfilms (7) 0,4 bis 2 $\mu$m beträgt.

9. Flüssigkristall-Anzeigevorrichtung nach einem der Ansprüche 1 bis 8,
**dadurch gekennzeichnet, daß**
der Orientierungsfilm (8) aus einem organischen Material hergestellt ist und der Isolierfilm (7) aus einem anorganischen Material besteht oder eine Doppelschichtstruktur aus einem anorganischen Material und einem organischen Material aufweist.

10. Flüssigkristall-Anzeigevorrichtung nach einem der Ansprüche 1 bis 9,
**dadurch gekennzeichnet, daß**
der Orientierungsfilm (8) aus einem organischen Material hergestellt ist und der Isolierfilm (7) aus einem anorganischen Material besteht und die aus dem organischen Material bestehende Schicht dikker ist als die aus dem anorganischen Material bestehende Schicht.

11. Flüssigkristall-Anzeigevorrichtung nach einem der Ansprüche 1 bis 10,
**dadurch gekennzeichnet, daß**
sowohl der Orientierungsfilm (8) als auch der Isolierfilm (7) aus einem organischen Material bestehen.

12. Flüssigkristall-Anzeigevorrichtung nach einem der Ansprüche 1 bis 11,
**dadurch gekennzeichnet, daß**
die Oberflächenebene des Orientierungsfilms (8), die an die Flüssigkristallschicht (12) angrenzt, flach ist.

13. Flüssigkristall-Anzeigevorrichtung nach einem der Ansprüche 1 bis 8, 11 und 12,
**dadurch gekennzeichnet, daß**
sowohl der Orientierungsfilm (8) als auch der Isolierfilm (7) aus dem gleichen Material bestehen.

14. Flüssigkristall-Anzeigevorrichtung nach einem der Ansprüche 1 bis 13,
**dadurch gekennzeichnet, daß**
ein Farbfilter auf einem der Substrate (1) vorgesehen ist und der Isolierfilm (7) zwischen dem Farbfilter und der Flüssigkristallschicht (12) angeordnet ist.

15. Flüssigkristall-Anzeigevorrichtung nach einem der Ansprüche 1 bis 14,

**dadurch gekennzeichnet, daß**

ein Abflachungsfilm vorgesehen ist, der zur Abflachung der Stufen auf der Oberfläche des aus einem organischen Material bestehenden Farbfilters dient, und ein anorganischer Film auf dem Abflachungsfilm ausgebildet ist.

**16.** Flüssigkristall-Anzeigevorrichtung nach Anspruch 14 oder 15,

**dadurch gekennzeichnet, daß**

ein Farbfilter auf dem Substrat (1) ausgebildet ist, das Abtastsignalelektroden, Bildsignalelektroden, Bildelementelektroden und aktive Elemente für die Bildelemente aufweist, und der Isolierfilm (7) zwischen dem Farbfilter und der Flüssigkristallschicht (12) vorgesehen ist.

**17.** Flüssigkristall-Anzeigevorrichtung nach einem der Ansprüche 1 bis 16,

**dadurch gekennzeichnet, daß**

eine Einrichtung zur Eingabe von Informationen, eine Einrichtung zur Berechnung oder Verarbeitung dieser Informationen in einer vorgegebenen Weise, eine Vorrichtung zur Ausgabe der verarbeiteten Informationen, eine Vorrichtung zur Speicherung der verarbeiteten Informationen und eine interne Stromquelle vorgesehen sind.

**Revendications**

**1.** Dispositif d'affichage à cristaux liquides du type à commutation dans le plan, comportant :

des éléments d'image d'affichage comportant chacun des électrodes (3, 4, 5) agencées sur le premier substrat d'une paire de substrats (1), un film d'orientation (8) pour la couche de cristaux liquides (12) formé sur le premier substrat (1) directement ou via un film isolant (7), le premier substrat (1) étant agencé de manière à faire face au second substrat (1) sur lequel un autre film d'orientation (8) est formé, la couche de cristaux liquides (12) étant maintenue entre les deux substrats (1), les électrodes étant conçues de manière à générer un champ électrique (9) sensiblement parallèle aux substrats (1) et à la couche de cristaux liquidés (12), et pouvant être connectées à des moyens de commande externes (20, 21, 22), et des polariseurs (2) agencés sur les faces extérieures des substrats (1),

**caractérisé en ce que**

les valeurs des produits respectifs $(\varepsilon_r\rho)_{LC}$, $(\varepsilon_r\rho)_{AF}$ et $(\varepsilon_r\rho)_{PAS}$ des constantes diélectriques spécifiques $\varepsilon_r$ et des résistivités spécifiques $\rho$ de la couche de cristaux liquides (LC) (12), du film d'orientation (AF) (8) et du film isolant (PAS) (7) ont une relation exprimée par les équations suivantes (1) à (3) :

$$0,1 \leq (\varepsilon_r\rho)_{LC}/(\varepsilon_r\rho)_{AF} \leq 10 \qquad (1)$$

$$0,1 \leq (\varepsilon_r\rho)_{LC}/(\varepsilon_r\rho)_{PAS} \leq 10 \qquad (2)$$

$$0,1 \leq (\varepsilon_r\rho)_{AF}/(\varepsilon_r\rho)_{PAS} \leq 10 \qquad (3).$$

**2.** Dispositif d'affichage à cristaux liquides selon la revendication 1,

**caractérisé en ce que**

les produits respectifs $(\varepsilon_r\rho)_{LC}$, $(\varepsilon_r\rho)_{AF}$ et $(\varepsilon_r\rho)_{PAS}$ se trouvent dans la plage de $1\cdot10^9$ à $8\cdot10^{15}$ $\Omega\cdot$cm.

**3.** Dispositif d'affichage à cristaux liquides selon la revendication 1 ou 2,

**caractérisé en ce que**

le film d'orientation (8) est formé sur le premier substrat (1) via un film isolant (7).

**4.** Dispositif d'affichage à cristaux liquides selon l'une quelconque des revendications 1 à 3,

**caractérisé en ce que**

le film d'orientation (8) et/ou le film isolant (7) ont une résistance superficielle de 3, $0\cdot10^{11}$ à $2,5\cdot10^{18}$ $\Omega/\square$.

**5.** Dispositif d'affichage à cristaux liquides selon l'une quelconque des revendications 1 à 4,

**caractérisé en ce que**

le rapport entre la valeur maximale et la valeur minimale des produits respectifs $(\varepsilon_r\rho)_{LC}$, $(\varepsilon_r\rho)_{AF}$ et $(\varepsilon_r\rho)_{PAS}$ est compris entre 1 et 100.

**6.** Dispositif d'affichage à cristaux liquides selon l'une quelconque des revendications 1 à 5, dans lequel les éléments d'image d'affichage sont constitués d'électrodes de signal de balayage, d'électrodes de signal d'image, d'électrodes d'élément d'image, et d'éléments actifs prévus sur le premier substrat (1).

**7.** Dispositif d'affichage à cristaux liquides selon l'une quelconque des revendications 1 à 6,

**caractérisé en ce que**

la somme des épaisseurs de film du film d'orientation (8) et du film isolant (7) est comprise entre 0,5 et 3 µm.

**8.** Dispositif d'affichage à cristaux liquides selon l'une quelconque des revendications 1 à 7,

**caractérisé en ce que**

l'épaisseur de film du film isolant (7) est comprise entre 0,4 et 2 μm.

9. Dispositif d'affichage à cristaux liquides selon l'une quelconque des revendications 1 à 8,

**caractérisé en ce que**

le film d'orientation (8) est constitué d'une matière organique, et le film isolant (7) est constitué d'une matière inorganique ou a une structure double-couche d'une matière inorganique et d'une matière organique.

10. Dispositif d'affichage à cristaux liquides selon l'une quelconque des revendications 1 à 9,

**caractérisé en ce que**

le film d'orientation (8) est constitué d'une matière organique, et le film isolant (7) est constitué d'une matière inorganique, et la couche constituée de la matière organique est plus épaisse que la couche constituée de la matière inorganique.

11. Dispositif d'affichage à cristaux liquides selon l'une quelconque des revendications 1 à 10,

**caractérisé en ce que**

le film d'orientation (8) et le film isolant (7) sont tous deux constitués d'une matière organique.

12. Dispositif d'affichage à cristaux liquides selon l'une quelconque des revendications 1 à 11,

**caractérisé en ce que**

le plan de surface du film d'orientation (8) venant en butée sur la couche de cristaux liquides (12) est plat.

13. Dispositif d'affichage à cristaux liquides selon l'une quelconque des revendications 1 à 8, 11 et 12,

**caractérisé en ce que**

le film d'orientation (8) et le film isolant (7) sont tous deux constitués de la même matière.

14. Dispositif d'affichage à cristaux liquides selon l'une quelconque des revendications 1 à 13,

**caractérisé en ce que**

un filtre coloré est prévu sur l'un des substrats (1) et le film isolant (7) est prévu entre le filtre coloré, et la couche de cristaux liquides (12).

15. Dispositif d'affichage à cristaux liquides selon l'une quelconque des revendications 1 à 14,

**caractérisé en ce que**

un film d'aplanissement ayant la fonction d'aplanir des marches sur la surface de filtre coloré constituée d'une matière organique est prévu, et un film inorganique est formé sur le film d'aplanissement.

16. Dispositif d'affichage à cristaux liquides selon la revendication 14 ou 15,

**caractérisé en ce que**

un filtre coloré est formé sur le substrat (1) qui a des électrodes de signal de balayage, des électrodes de signal d'image, des électrodes d'élément d'image, et des éléments actifs pour les éléments d'image, et le film isolant (7) est prévu entre le filtre coloré et la couche de cristaux liquides (12).

17. Dispositif d'affichage à cristaux liquides selon l'une quelconque des revendications 1 à 16,

**caractérisé en ce que**

des moyens pour entrer des informations, des moyens pour calculer ou traiter ces informations d'une manière prédéterminée, un dispositif pour émettre les informations traitées, un dispositif pour mémoriser les informations traitées, et une source de puissance interne sont prévus.

FIG. 1(a)

FIG. 1(b)

FIG. 1(c)

FIG. 1(d)

FIG. 2

# FIG. 3

# FIG. 4

# FIG. 5

# FIG. 6

FIG. 7

# FIG. 8

MEDIUM 2  $\varepsilon_2$

MEDIUM 1  $\varepsilon_1$

$$\frac{\tan\theta_1}{\varepsilon_1} = \frac{\tan\theta_2}{\varepsilon_2}$$

LIQUID CRYSTAL LAYER

ORIENTING FILM

INSULATING FILM

$\varepsilon_{PAS} > \varepsilon_{LC} > \varepsilon_{AF}$     $\varepsilon_{PAS} > \varepsilon_{LC} > \varepsilon_{AF}$

# FIG. 9(a)

# FIG. 9(b)

## FIG. 10 (a)

COMPARATIVE EXAMPLE 4
EMBODIMENT 24
EMBODIMENT 13
EMBODIMENT 14
EMBODIMENT 15
EMBODIMENT 16
EMBODIMENT 17,22
EMBODIMENT 19
EMBODIMENT 21
COMPARATIVE EXAMPLE 3
EMBODIMENT 23
EMBODIMENT 21
EMBODIMENT 20

VISUAL EVALUATION OF RESIDUAL IMAGE

FILM THICKNESS (PROTECTING FILM + ORIENTING FILM) (μm)

## FIG. 10 (b)

COMPARATIVE EXAMPLE 4
EMBODIMENT 24
EMBODIMENT 13
EMBODIMENT 14
EMBODIMENT 15
EMBODIMENT 16
EMBODIMENT 17
EMBODIMENT 18
EMBODIMENT 23
EMBODIMENT 22
EMBODIMENT 20
EMBODIMENT 21
EMBODIMENT 19
COMPARATIVE EXAMPLE 3

TRANSMISSION FACTOR (%)

FILM THICKNESS (PROTECTING FILM + ORIENTING FILM) (μm)

## FIG. 11(a)

CHARGING PROCESS

DISCHARGING PROCESS

ELECTRIC CHARGE

UNDESIRABLE RESIDUAL IMAGE CHARACTERISTICS

PREFERABLE RESIDUAL IMAGE CHARACTERISTICS

TIME

## FIG. 11(b)

CHARGING PROCESS

DISCHARGING PROCESS

ELECTRIC CHARGE

UNDESIRABLE RESIDUAL IMAGE CHARACTERISTICS

PREFERABLE RESIDUAL IMAGE CHARACTERISTICS

TIME